# EUROPÄISCHE PATENTANMELDUNG

(11) **EP 4 741 272 A1**
(43) Veröffentlichungstag der Anmeldung: **13.05.2026**
(21) Anmeldenummer: 24211121.9
(22) Anmeldetag: 06.11.2024
(51) Int. Cl.: B62M 19/00

(54) **HYDRAULISCHES GETRIEBE FÜR EIN ZWEIRAD**

(71) Anmelder: FNF Innovation Sh.P.K., 60000 Gjilan, Kosovo (AL)
(72) Erfinder: FEHMI, Mustafa, 60000 Gjilan, Kosovo (AL)
(74) Vertreter: Kador & Partner Part mbB

(57) **Zusammenfassung**

Die vorliegende Erfindung betrifft ein hydraulisches Getriebe für ein Zweirad, aufweisend mindestens eine Turbine (100) mit einer Turbinenwelle (22), die mit einer Nabe mindestens eines Rads des Zweirads verbindbar ist, einem Rotor (24), der mit der Turbinenwelle (22) verbunden ist, und einem Gehäuse (31), in dem der Rotor (24) angeordnet ist, wobei der Rotor (24) in dem Gehäuse (31) mindestens zwei Kanäle (28) ausbildet, die in unterschiedlichen Abständen konzentrisch zu der Turbinenwelle (22) angeordnet sind, und in denen jeweils eine oder mehrere Rotorschaufeln (42) angeordnet sind; und eine Pumpe (200), die mit einer Antriebswelle (51) des Zweirads verbindbar ist, an der mindestens eine Kurbel (43, 50) angebracht ist, wobei die Pumpe (200) dazu eingerichtet ist, Flüssigkeit in einem Kreislauf von einem Ausgang (60) der Pumpe durch einen der mindestens zwei Kanäle (28) der Turbine (100) zurück zu einem Eingang (52) der Pumpe (200) zu fördern.

## Beschreibung

Die vorliegende Erfindung bezieht sich auf ein neuartiges hydraulisches Getriebe für ein Zweirad.

Hydraulische Getriebe für Fahrräder sind im Stand der Technik bekannt. Beispielsweise zeigt DE 196 12 519 A1 ein solches hydraulisches Getriebe, das eine an einer Tretkurbelwelle eines Fahrrads angeordnete Hydropumpe aufweist, die fluidisch mit einem Hydromotor an einer Radnabe des Fahrrads verbunden ist. Die Hydropumpe ist als Flügelzellenpumpe mit mehreren Förderzellen ausgeführt, wobei eine Umfangsrandfläche wenigstens einer Förderzelle durch eine Verdrängungsklappe gebildet ist, die radial zu einer Pumpenantriebswelle verstellbar ist. Auf diese Weise kann ein Fördervolumen der Flügelzellenpumpe variiert und dadurch eine Übersetzungsverhältnis zwischen der Tretkurbelwelle und der Radnabe verändert werden.

Die vorliegende Erfindung hat sich zum Ziel gesetzt, ein hydraulisches Getriebe für ein Zweirad bereitzustellen, dass eine hohe Effizienz sowie einen robusten und kompakten Aufbau aufweist.

Die vorliegende Erfindung stellt daher ein hydraulisches Getriebe für ein Zweirad vor, das mindestens eine Turbine mit einer Turbinenwelle aufweist, die mit einer Nabe mindestens eines anzutreibenden Rads des Zweirads verbindbar ist. Dazu kann die Turbinenwelle eine Abtriebswelle bzw. einen Abtriebswellenabschnitt umfassen, der z.B. mit einer üblichen Welle-Nabe-Verbindung mit der Nabe des anzutreibenden Rads verbunden werden kann.

Die Turbine umfasst einem Rotor, der mit der Turbinenwelle verbunden ist, und ein Gehäuse, in dem der Rotor angeordnet ist. Der Rotor kann insbesondere fest mit der Turbinenwelle verbunden sein, z.B. ebenfalls mittels einer üblichen Welle-Nabe-Verbindung. Es ist ebenso möglich, dass der Rotor auf die Turbinenwelle gepresst ist oder die Turbinenwelle und der Rotor einstückig ausgeführt sind.

Die Turbinenwelle kann mittels geeigneter Lager, in dem Turbinengehäuse gelagert sein. Das Turbinengehäuse kann insbesondere zweiteilig ausgeführt sein, um die Turbinenwelle mit dem Rotor auf einfache Weise darin anordnen zu können. Die beiden Gehäuseteile können beispielsweise miteinander verschraubt sein. Jede andere geeignete Verbindung der beiden Gehäuseteile ist ebenso möglich.

Der Rotor bildet in dem Turbinengehäuse mindestens zwei Kanäle aus, die in unterschiedlichen Abständen konzentrisch zu der Turbinenwelle angeordnet sind, und in denen jeweils eine oder mehrere Rotorschaufeln angeordnet sind. Die Rotorschaufeln können auf einem Umfang der Turbinenwelle angebracht sein und sich von dort bis zu einem äußeren Umfang des Rotors erstrecken, so dass jeder Kanal durch die Rotorschaufeln in einzelne Segmente unterteilt ist. Alternativ können in jedem Kanal separate Rotorschaufeln angeordnet sein, die z.B. jeweils an einem konzentrisch zu der Turbinenwelle angeordneten Ring in dem Kanal befestigt sein können. Die Ringe können beispielsweise mittels radialer Streben bzw. Speichen mit der Turbinenwelle verbunden sein.

Zwischen dem Rotor und dem Turbinengehäuse können mehrere Dichtungen, insbesondere Dichtringe, angebracht sein, um die einzelnen Kanäle in dem Turbinengehäuse derart abzudichten, dass keine Flüssigkeit von einem Kanal in einen anderen gelangt. Eine Anzahl von Dichtungen kann insbesondere an eine Anzahl von Kanälen in dem Turbinengehäuse angepasst sein.

Gemäß einer Ausführungsform kann jeder der mindestens zwei Kanäle der Turbine einen Eingang und einen Ausgang aufweisen. Die Dichtungen können insbesondere an den einzelnen Ein- und Ausgängen der Kanäle zwischen dem Rotor und dem Turbinengehäuse angebracht sein.

Über den jeweiligen Eingang kann die Flüssigkeit auf die Rotorschaufeln eines der mindestens zwei Kanäle geleitet werden und den Rotor an einem Umfang antreiben, der durch den Abstand des Kanals zu der Turbinenwelle bestimmt ist. Auf diese Weise können auf einfache Weise unterschiedliche Drehzahlen und Drehmomente an dem anzutreibenden Rad bereitgestellt werden. Dabei kann ein hohes Drehmoment und eine niedrige Drehzahl bereitgestellt werden, wenn die Flüssigkeit in einen Kanal geleitet wird, der einen großen Abstand zu der Turbinenwelle aufweist und vice versa. Insbesondere kann der Rotor eine Vielzahl von konzentrischen Kanälen mit unterschiedlichen Abständen zu der Turbinenwelle in dem Turbinengehäuse ausbilden, welche eine Vielzahl unterschiedlicher Übersetzungen an dem anzutreibenden Rad ermöglichen.

Über den Ausgang jedes Kanals kann die Flüssigkeit zurück zu einer Pumpe des hydraulischen Getriebes strömen, welche diese in einem Kreislauf, insbesondere in einem geschlossenen Flüssigkeitskreislauf, von einem Ausgang der Pumpe durch einen der mindestens zwei Kanäle der Turbine zurück zu einem Eingang der Pumpe fördert. Bei der Pumpe kann es sich insbesondere um eine Flügelradpumpe handeln, welche ein Gehäuse umfasst, in dem der Eingang und der Ausgang der Pumpe angeordnet sind. Analog zu dem Turbinengehäuse kann das Pumpengehäuse zweiteilig ausgeführt sein, wobei die beiden Gehäuseteile z.B. miteinander verschraubt sein können. Jede andere geeignete Verbindung der beiden Gehäuseteile ist ebenso möglich.

Die Pumpe ist mit einer Antriebswelle des Zweirads verbindbar, an der mindestens eine Kurbel angebracht ist, auf die eine Kraft aufgebracht werden kann. Auf diese Weise kann die Antriebswelle mit einem bestimmten Drehmoment und einer bestimmten Drehzahl angetrieben werden, wodurch die Pumpe Flüssigkeit mit einem bestimmten Druck zu der Turbine fördern kann. Das Drehmoment (Kurbelmoment) kann beispielsweise durch Muskelkraft eines auf dem Zweirad befindlichen Fahrers in bekannter Weise auf die mindestens eine Kurbel aufgebracht werden, so dass diese mit einer entsprechenden Drehzahl (Kurbeldrehzahl) rotiert. Insbesondere kann die Antriebswelle dazu an ihren beiden Enden eine Kurbel z.B. mit einem Pedal aufweisen (Kurbeltrieb).

Als Flüssigkeit wird vorzugsweise Wasser eingesetzt. Es kann aber auch jede andere Hydraulikflüssigkeit auf Mineralöl- oder auf Wasserbasis eingesetzt werden.

Gemäß einer Ausführungsform kann vor den Eingängen der Kanäle der Turbine eine Umschaltvorrichtung angeordnet sein, die dazu eingerichtet ist, die Flüssigkeit in einen der Kanäle zu leiten. Zweckmäßigerweise kann die Umschaltvorrichtung dabei die Eingänge der anderen Kanäle versperren. Auf diese Weise kann gezielt eine geeignete Übersetzung des Kurbelmoments bzw. der Kurbeldrehzahl an dem anzutreibenden Rad eingestellt werden. Die Umschaltvorrichtung kann beispielsweise ein Gehäuse enthalten, in dem ein Schaltzylinder angeordnet ist, der eine Anzahl von Strömungskanälen aufweist, die einer Anzahl von Kanälen in dem Turbinengehäuse entspricht.

Insbesondere kann die Umschaltvorrichtung in dem Gehäuse der Turbine integriert sein, d.h. das Gehäuse der Umschaltvorrichtung kann Teil des Turbinengehäuses sein. Je nach Stellung des Schaltzylinders in dem Gehäuse, kann einer der Strömungskanäle mit einem entsprechenden Kanal der Turbine verbunden sein, so dass an einem Eingang der Umschaltvorrichtung in deren Gehäuse eintretende Flüssigkeit über den Schaltzylinder in den gewünschten Kanal der Turbine geleitet wird. Dabei kann der Schaltzylinder die Eingänge aller anderen Kanäle der Turbine verschließen.

Gemäß einer Ausführungsform kann der Ausgang der Pumpe mittels einer ersten hydraulischen Verbindung mit einem Eingang der Umschaltvorrichtung verbunden sein, und die Ausgänge der Kanäle der Turbine können mittels einer zweiten hydraulischen Verbindung mit dem Eingang der Pumpe verbunden sein. Auf diese Weise kann der Flüssigkeitskreislauf zwischen Pumpe und Turbine ausgebildet werden. Zweckmäßigerweise kann an den Ausgängen der Kanäle ein Sammler angeordnet sein, in den die Flüssigkeit vor Eintritt in die zweite hydraulische Verbindung strömt. Die beiden hydraulischen Verbindungen können z.B. als Leitungen und/oder als Rohre ausgebildet und insbesondere aus durchsichtigem Material gefertigt sein, so dass eine Strömung der Flüssigkeit in dem Kreislauf von außen sichtbar ist. Es ist ebenso möglich, dass das Turbinengehäuse und das Pumpengehäuse ebenfalls aus einem durchsichtigen Material gefertigt sind. Dadurch kann sowohl eine Funktion des hydraulischen Getriebes überwacht als auch ein optisch ansprechendes Design erzielt werden.

In einer Ausführungsform kann die Umschaltvorrichtung mit einem Schalthebel des Zweirads verbunden sein. Der Schalthebel kann z.B. in bekannter Weise an einer Lenkstange des Zweirads angebracht und insbesondere mechanisch mit der Umschaltvorrichtung verbunden sein. Beispielsweise kann der Schaltzylinder eine Schaltvorrichtung umfassen, mittels derer er durch Betätigen des Schalthebels in die gewünschte Stellung gebracht werden kann. Die Schaltvorrichtung kann insbesondere dazu eingerichtet sein, den Schaltzylinder in dem Gehäuse zu drehen, um einen von dessen Strömungskanälen mit einem zugehörigen Kanal der Turbine zu verbinden. Dazu kann die Schaltvorrichtung beispielsweise als Ritzel ausgeführt sein, das z.B. über einen Seilzug mit dem Schalthebel gekoppelt sein kann. Jede andere geeignete mechanische oder hydraulische Kopplung zwischen Schalthebel und Schaltzylinder ist ebenso möglich. Wenn der Schalthebel betätigt, insbesondere in eine bestimmte Stellung gebracht wird, so wird der Zylinder z.B. mittels des Seilzugs und des Ritzels in eine zu der Stellung des Schalhebels korrespondierende Stellung gedreht. Dadurch strömt die Flüssigkeit von dem Eingang der Umschaltvorrichtung durch den Schaltzylinder in einen Kanal der Turbine, welcher eine der Schalthebelstellung entsprechende Übersetzung des Kurbelmoments bzw. der Kurbeldrehzahl an dem anzutreibenden Rad liefert.

Gemäß einer Ausführungsform kann die Pumpe über einen Freilauf mit der Antriebswelle verbunden sein. Der Freilauf kann eine Außen- und eine Innenseite aufweisen, die beispielsweise als Außenring und Innenring ausgebildet sein können. Der Außenring kann dabei mit der Pumpe und der Innenring mit der Antriebswelle fest verbunden sein. Auf der Außenseite bzw. dem Außenring des Freilaufs können ein oder mehrere Pumpenflügel angeordnet sein. Auf gegenüberliegenden Seiten des Freilaufs kann zwischen diesem und dem Pumpengehäuse jeweils eine Dichtung, insbesondere ein Dichtring, angebracht sein.

Der Außen- und Innenring können gegeneinander sperren (Mitnahmemodus) oder freilaufen (Freilaufmodus), wobei im Mitnahmemodus ein Drehmoment über den Innenring des Freilaufs eingeleitet und über den Außenringring auf die Pumpe übertragen werden kann. Insbesondere kann sich der Freilauf in Antriebsrichtung des Kurbeltriebs im Mitnahmemodus und gegen die Antriebsrichtung des Kurbeltriebs im Freilaufmodus befinden. Unter der Antriebsrichtung des Kurbeltriebs soll die Richtung verstanden werden, welche üblicherweise eine Vorwärtsbewegung des Zweirads zur Folge hat. Mittels des Freilaufs kann zum einen, das durch den Fahrer aufgebrachte Kurbelmoment zur gezielten Vorwärtsbewegung des Zweirads genutzt und zum anderen verhindert werden, dass aufgrund von Trägheitskräften und -momenten in dem hydraulischen Getriebe ein Rückdrehmoment von dem Kurbeltrieb auf den Fahrer ausgeübt wird.

Gemäß einer Ausführungsform kann sich eine Rückseite (stromaufwärtige Seite) jedes Pumpenflügels senkrecht zu der Außenseite des Freilaufs radial nach außen erstrecken und sich eine Vorderseite (stromabwärtige Seite) jedes Pumpenflügels unter einem Neigungswinkel von der Außenseite des Freilaufs zu einer äußeren Kante der Rückseite erstrecken. Dadurch kann jeder Pumpenflügel in einem Längsschnitt durch die Pumpe eine Form eines rechtwinkligen Dreiecks aufweisen.

In einer Ausführungsform kann die Pumpe einen zu der Antriebswelle konzentrischen Umlaufkanal enthalten, der den Eingang und den Ausgang der Pumpe verbindet. Zudem kann die Pumpe einen Sperrkanal aufweisen, der zwischen dem Eingang und dem Ausgang der Pumpe angeordnet und mittels eines Ventils verschlossen ist. Zweckmäßigerweise können der Umlaufkanal und der Sperrkanal in dem Pumpengehäuse angeordnet sein.

Der Umlaufkanal kann eine Kreisbogenform aufweisen und so ausgestaltet sein, dass ein Mittelpunktswinkel eines der Form des Umlaufkanals zugrundeliegenden Kreisbogens zwischen Pumpeneingang und Pumpenausgang in einem Bereich zwischen 30° und 180° liegt, wobei dieser Mittelpunktswinkel üblicherweise 180° beträgt. Insbesondere kann der Umlaufkanal parallel zu einer Ebene senkrecht zu einer Achse der Antriebswelle in dem Pumpengehäuse angeordnet sein. Ein Durchmesser des Umlaufkanals kann zweckmäßigerweise gleich oder größer als eine Länge der Rückseite der Pumpenflügel sein, so dass sich diese von der Außenseite des Freilaufs radial nach außen erstrecken können, um die Flüssigkeit durch die Pumpe zu fördern.

In einer Ausführungsform kann der Pumpeneingang dazu eingerichtet sein, die Flüssigkeit in tangentialer Richtung zu einem zu der Antriebswelle konzentrischen Kreis in den Umlaufkanal einzuleiten. Ebenso kann der Pumpenausgang dazu eingerichtet sein, die Flüssigkeit in tangentialer Richtung zu dem zu der Antriebswelle konzentrischen Kreis aus dem Umlaufkanal herauszuleiten. Dabei kann durch den Pumpeneingang in den Umlaufkanal tangential eintretende Flüssigkeit auf im Umlaufkanal befindliche Rückseiten der Pumpenflügel drücken und somit eine Rotation des Freilaufs bzw. der Antriebswelle in Strömungsrichtung der Flüssigkeit bewirken. Die Flüssigkeit kann nach dem Umlauf im Umlaufkanal durch den Pumpenausgang tangential aus der Pumpe austreten. Dies kann insbesondere mit einem konstanten Moment und mit tangentialer Wirkung erfolgen, d.h. die Strömungsrichtung der Flüssigkeit kann an jedem Punkt im Umlaufkanal tangential zu dessen Kreisbogenform sein. Mit anderen Worten kann die tangentiale Wirkung an jedem Punkt während des gesamten Umlaufs der Flüssigkeit im Umlaufkanal bestehen, wodurch ein hoher Wirkungsgrad der Pumpe erreicht werden kann.

Vorzugsweise ist der Umlaufkanal Teil eines ringförmig, konzentrisch um den Freilauf bzw. die Antriebswelle ausgebildeten Gesamtkanals, der Öffnungen für den Pumpeneingang und den Pumpenausgang sowie den Sperrkanal aufweist. Das Ventil in dem Sperrkanal verhindert, dass Flüssigkeit, die sich im Bereich des Pumpenausgangs befindet, zurück zum Pumpeneingang gelangen kann. Somit kann verhindert werden, dass bezüglich der in der Pumpe umlaufend strömenden Flüssigkeit ein "Kurzschluss" erfolgt. Dazu kann das Ventil ein Schließelement aufweisen, das einen Querschnitt des Sperrkanals verschließt. Das Schließelement kann beispielsweise ein Schließzylinder sein.

Der Gesamtkanal kann auf seinem gesamten Umfang einen gleichen Durchmesser aufweisen, so dass sich die Pumpenflügel auch in dem Sperrkanal in gleicher Weise nach außen erstrecken können wie in dem Umlaufkanal.

In einer Ausführungsform kann jeder Pumpenflügel dazu eingerichtet sein, das Ventil zu öffnen, wenn ein Pumpenflügel den Sperrkanal passiert. Insbesondere kann in diesem Fall das Schließelement des Ventils mittels der geneigten Vorderseite des Pumpenflügels aus einer geschlossenen Stellung in eine geöffnete Stellung geschoben werden. Dabei kann der Sperrkanal bei geöffnetem Ventil von dem Pumpenflügel verschlossen werden, da sich dieser über einen Durchmesser des Sperrkanals erstreckt. Das Ventil kann eine Druckfeder umfassen, gegen deren Federkraft der Pumpenflügel das Ventil öffnet und die das Ventil wieder schließt, sobald der Pumpenflügel das Ventil überfahren hat. Anstelle einer Druckfeder kann das Ventil einen Magneten zum Schließen des Ventils enthalten. Insbesondere können die Druckfeder oder der Magnet auf das Schließelement wirken, so dass dieses in eine Stellung geschoben wird, in der es den Sperrkanal verschließt.

Gemäß einer Ausführungsform kann ein Abschnitt des Sperrkanals der zwischen dem Ventil und dem Ausgang der Pumpe angeordnet ist, mittels eines Bypasskanals mit dem Ausgang der Pumpe verbunden sein. Dadurch kann Flüssigkeit, die sich zwischen der Vorderseite eines in den Sperrkanal eintretenden Pumpenflügels und dem Schließelement des Ventils befindet, zu dem Pumpenausgang geleitet werden. Auf diese Weise kann verhindert werden, dass sich Flüssigkeit in dem Sperrkanal vor dem Ventil staut und dadurch eine Rotation des Freilaufs behindert oder sogar ganz verhindert wird.

Die vorliegende Erfindung bezieht sich weiterhin auf eine Verwendung eines erfindungsgemäßen Getriebes in einem Zweirad, insbesondere in einem Fahrrad oder einem Motorrad.

Die Erfindung betrifft zudem ein Zweirad, insbesondere ein Fahrrad oder ein Motorrad, umfassend zumindest ein erfindungsgemäßes hydraulisches Getriebe.

### Beispiel

Eine Ausführungsform des erfindungsgemäßen hydraulischen Getriebes wird im Folgenden unter Bezugnahme auf die Figuren näher beschrieben. In den Figuren sind gleiche oder ähnliche Elemente mit gleichen Bezugszeichen versehen. Daher wird gegebenenfalls auf eine wiederholende Beschreibung verzichtet.
Figur 1 zeigt in vereinfachter schematischer Schnittdarstellung einen Querschnitt durch eine Turbine gemäß einem Ausführungsbeispiel der Erfindung.
Figur 2 zeigt in vereinfachter schematischer Schnittdarstellung einen Längsschnitt durch die in Figur 2 gezeigte Turbine
Figur 3 zeigt in vereinfachter schematischer Schnittdarstellung einen Längsschnitt durch eine Pumpe gemäß einem Ausführungsbeispiel der Erfindung.

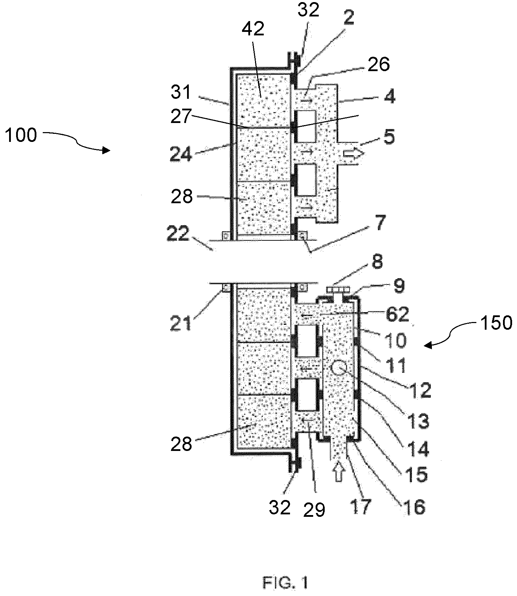

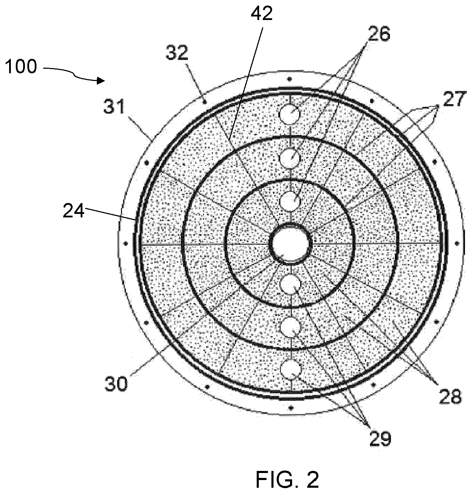

In den Figuren 1 und 2 sind ein Querschnitt und ein Längsschnitt durch eine Turbine 100 dargestellt, die in einem Ausführungsbeispiel eines erfindungsgemäßen hydraulischen Getriebes für ein Zweirad zum Einsatz kommen kann. Alle Bereiche der Turbine 100, welche mit Flüssigkeit beaufschlagt werden können, sind in beiden Figuren durch gepunktete Flächen gekennzeichnet. Eine Strömungsrichtung der Flüssigkeit ist in Figur 1 durch Pfeile angedeutet.

Die Turbine 100 weist eine Turbinenwelle 22 auf, die mit einer Nabe mindestens eines anzutreibenden Rads des Zweirads (nicht dargestellt) verbindbar ist. Dazu kann die Turbinenwelle 22 eine Abtriebswelle 30 bzw. einen Abtriebswellenabschnitt 30 umfassen, der z.B. mit einer üblichen Welle-Nabe-Verbindung mit der Nabe des anzutreibenden Rads verbunden werden kann.

Die Turbine 100 umfasst zudem einem Rotor 24, der mit der Turbinenwelle 22 verbunden ist, und ein Gehäuse 31, in dem der Rotor 24 angeordnet ist. Der Rotor 24 ist dabei fest mit der Turbinenwelle 22 verbunden, z.B. mittels einer üblichen Welle-Nabe-Verbindung (nicht dargestellt). Es ist ebenso möglich, dass der Rotor 24 auf die Turbinenwelle 22 gepresst ist oder die Turbinenwelle 22 und der Rotor 24 einstückig ausgeführt sind.

Die Turbinenwelle 22 ist mittels zweier Lager 7, 21 in dem Turbinengehäuse 31 gelagert. Das Turbinengehäuse 31 ist vorliegend zweiteilig ausgeführt und weist auf einem äußeren Umfang eine Vielzahl von Verschraubungen 32 auf.

Der Rotor 24 bildet vorliegend in dem Turbinengehäuse 31 drei Kanäle 28 aus, die in unterschiedlichen Abständen konzentrisch zu der Turbinenwelle 22 angeordnet sind, und in denen mehrere Rotorschaufeln 42 angeordnet sind. Dazu umfasst der Rotor drei konzentrische Ringe 27, welche die einzelnen Kanäle 28 voneinander trennen. Die Rotorschaufeln 42 sind vorliegend auf einem Umfang der Turbinenwelle 22 angebracht und erstrecken sich von dort bis zu einem äußeren Umfang des Rotors 24, so dass jeder Kanal 28 durch die Rotorschaufeln 42 in einzelne nicht näher bezeichnete Segmente unterteilt ist (vgl. Figur 2).

Jeder der drei Kanäle 28 weist einen Eingang 29 und einen Ausgang 26 auf. An den einzelnen Eingängen 29 und Ausgängen der Kanäle 28 sind zwischen dem Rotor 24 und dem Turbinengehäuse 31 vier Dichtringe 2 angebracht, von denen nur ein äußerer Dichtring 2 bezeichnet ist (vgl. Figur 1). Die Dichtringe 2 haben die Aufgabe die einzelnen Kanäle 28 in dem Turbinengehäuse 21 abzudichten. Die Ausgänge 26 der Kanäle 28 münden in einen Sammler 4 mit einem Turbinenausgang 5.

Vor den Eingängen 29 der Kanäle 28 in dem Turbinengehäuse 31 ist eine Umschaltvorrichtung 150 angeordnet. Die Umschaltvorrichtung 150 umfasst ein Gehäuse 12, in dem ein Schaltzylinder 10 angeordnet ist, der drei Strömungskanäle 62, 13, 15 aufweist, von denen jeweils einer mit einem der Kanäle 28 in dem Turbinengehäuse 31 verbunden werden kann. Der Schaltzylinder 10 ist mittels zweier Lager 9, 16 in dem Gehäuse 12 der Umschaltvorrichtung 150 gelagert und weist auf einer Stirnseite ein Ritzel 8 auf, das außerhalb des Gehäuses 12 angeordnet ist. Das Ritzel 8 kann beispielsweise über einen Seilzug (nicht dargestellt) mit einem Schalthebel (nicht dargestellt) derart verbunden sein, dass der Schaltzylinder 10 bei einer Betätigung des Schalthebels in eine andere Position gedreht wird und dadurch einen anderen Strömungskanal 62, 13, 15 freigibt. Auf einer gegenüberliegenden Stirnseite des Schaltzylinders 10 ist ein Eingang 17 der Umschaltvorrichtung angeordnet. Des Weiteren sind an dem Schaltzylinder 10 zwei Dichtringe 11, 14 angebracht, welche dessen Strömungskanäle 62, 13, 15 in dem Gehäuse 12 abdichten. Das Gehäuse 12 der Umschaltvorrichtung 150 schließt direkt an das Turbinengehäuse 31 an bzw. ist in das Turbinengehäuse 31 integriert und damit Teil desselben.

Je nach Stellung des Schaltzylinders 10 in dem Gehäuse 12, die mittels des Schalthebels über Seilzug und Ritzel 8 eingestellt werden kann, wird einer der Strömungskanäle 62, 13, 15 mit einem entsprechenden Kanal 28 in dem Turbinengehäuse 31 verbunden. Dabei leitet ein Strömungskanal 62 eine in den Eingang 17 der Umschaltvorrichtung 150 einströmende Flüssigkeit (angedeutet durch einen Pfeil an dem Eingang 17) über einen Eingang 29 in einen Kanal 28 (innerer Kanal), der den kleinsten Abstand zu der Turbinenwelle 22 aufweist. Des Weiteren leitet ein Strömungskanal 13 die einströmende Flüssigkeit über einen weiteren Eingang 29 in einen Kanal 28 (mittlerer Kanal) mit einem größeren Abstand zu der Turbinenwelle 22 und ein Strömungskanal 15 leitet die einströmende Flüssigkeit über einen dritten Eingang 29 in einen Kanal 28 (äußerer Kanal), mit dem größten Abstand zu der Turbinenwelle 22 (angedeutet durch Pfeile in den Eingängen 29 der einzelnen Kanäle 28 der Turbine 100).

Die über den jeweiligen Eingang19 in dem entsprechenden Kanal 28 auf die Rotorschaufeln 42 strömende Flüssigkeit kann den Rotor 24 an einem Umfang antreiben, der durch den Abstand des jeweiligen Kanals 28 zu der Turbinenwelle 22 bestimmt ist. Auf diese Weise können auf einfache Weise unterschiedliche Drehzahlen und Drehmomente an dem anzutreibenden Rad des Zweirads bereitgestellt werden. Dabei kann ein hohes Drehmoment und eine niedrige Drehzahl bereitgestellt werden, wenn die Flüssigkeit in den äußeren Kanal 28 geleitet wird, und es kann ein niedriges Drehmoment und eine hohe Drehzahl bereitgestellt werden, wenn die Flüssigkeit in den inneren Kanal 28 geleitet wird.

Vorliegend befindet sich der Schaltzylinder 12 in einer Stellung, in welcher der Strömungskanal 62 mit dem inneren Kanal 28 der Turbine 100 verbunden ist, während Einströmöffnungen der anderen Strömungskanäle 13, 15 des Schaltzylinders 10 durch das Gehäuse 12 verschlossen sind. Folglich wird ein niedriges Drehmoment auf das anzutreibende Rad übertragen und dieses dreht sich mit hoher Drehzahl.

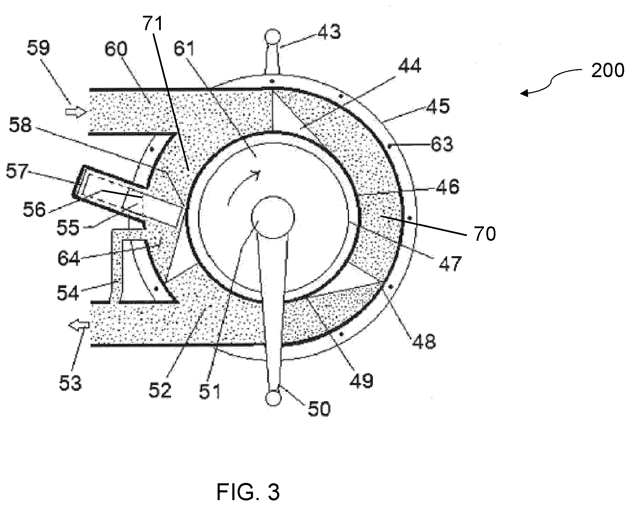

Die durch den inneren Kanal 28 strömende Flüssigkeit verlässt diesen über einen entsprechenden Ausgang 26 (angedeutet durch Pfeile in den Ausgängen 26 der einzelnen Kanäle 28 der Turbine 100) und strömt nachfolgend in den Sammler 4. Von diesem tritt die Flüssigkeit über den Turbinenausgang 5 aus der Turbine aus und strömt zum Eingang 59 einer in Figur 3 dargestellten Pumpe 200, die ebenfalls in einem Ausführungsbeispiel eines erfindungsgemäßen hydraulischen Getriebes zum Einsatz kommen kann.

Dabei zeigt Figur 3 einen Längsschnitt durch die Pumpe 200, die über einen Freilauf 61, 48 mit einer Antriebswelle 51 des Zweirads gekoppelt ist, welche an ihren beiden Enden jeweils eine Kurbel 43, 50 aufweist. Die Antriebswelle 51 und die Kurbeln 43, 50 stellen einen Kurbeltrieb dar, auf den ein Fahrer des Zweirads eine Kraft aufbringen kann, um die Pumpe 200 anzutreiben.

Die Antriebswelle 51 ist fest mit einem Innenring 61 und die Pumpe 200 ist fest mit einem Außenring 46 des Freilaufs 61, 46 verbunden. Insbesondere sind auf dem Außenring 46 drei Pumpenflügel 44 angeordnet, die in einem Gehäuse 45 der Pumpe 200 rotieren. Das Pumpengehäuse 45 ist zweiteilig ausgeführt und weist auf einem äußeren Umfang eine Vielzahl von Verschraubungen 63 auf.

Die Pumpenflügel 44 weisen in dem gezeigten Längsschnitt eine Form eines rechtwinkligen Dreiecks auf. Eine Rückseite der Pumpenflügel 44 erstreckt sich senkrecht zu dem Außenring 46 des Freilaufs 61, 46 bis zu dem äußeren Umfang des Gehäuses 45 und eine Vorderseite der Pumpenflügel 44 erstreckt sich unter einem Neigungswinkel von dem Außenring 46 des Freilaufs 61, 46 zu einer äußeren Kante der Rückseite, z. B. von einem tiefsten Punkt 49 zu einem höchsten Punkt 48 der Pumpenflügel 44.

Der Innenring 61 und der Außenring 46 des Freilaufs 61, 46 können gegeneinander sperren (Mitnahmemodus) oder freilaufen (Freilaufmodus), wobei im Mitnahmemodus ein Drehmoment über den Innenring 61 des Freilaufs 61, 46 eingeleitet und über den Außenring 46 auf die Pumpe 200 übertragen werden kann. Insbesondere kann sich der Freilauf 61, 46 in Antriebsrichtung des Kurbeltriebs im Mitnahmemodus und gegen die Antriebsrichtung des Kurbeltriebs im Freilaufmodus befinden. Unter der Antriebsrichtung des Kurbeltriebs soll die Richtung verstanden werden, welche üblicherweise eine Vorwärtsbewegung des Zweirads zur Folge hat. Diese ist auf dem Innenring 61 des Freilaufs durch einen Pfeil angedeutet. An dem Gehäuse 45 zugewandten Stirnseiten des Innenrings ist zwischen diesem und dem Gehäuse 45 jeweils ein Dichtring 47 angebracht.

In dem Pumpengehäuse 45 sind ein Umlaufkanal 70 und ein Sperrkanal 71 ausgebildet, die gemeinsam einen ringförmigen, konzentrisch um den Freilauf 61, 46 bzw. die Antriebswelle 51 angeordneten Gesamtkanal 70, 71 ausbilden. Zudem weist das Pumpengehäuse 45 einen Eingang 60 und einen Ausgang 52 auf, die mittels des Umlaufkanals 70 miteinander verbunden sind. Der Sperrkanal 71 ist zwischen dem Eingang 60 und dem Ausgang 52 der Pumpe 200 angeordnet und mittels eines Ventils 57 verschlossen. Dazu weist das Ventil 57 ein Schließelement 55 auf, das vorliegend als Schließzylinder 55 ausgebildet ist, der einen Querschnitt des Sperrkanals 71 verschließt. Der Umlaufkanal 70 weist eine Kreisbogenform auf, deren Mittelpunktswinkel 180° beträgt. Insbesondere ist der Umlaufkanal 70 vorliegend parallel zu einer Ebene senkrecht zu einer Achse der Antriebswelle 51 in dem Pumpengehäuse 45 angeordnet sein.

Ein Durchmesser des Umlaufkanals 70 sowie des Sperrkanals 71 ist im Wesentlichen gleich einer Länge der Rückseite der Pumpenflügel 44, so dass sich diese von dem Außenring 46 des Freilaufs 61, 46 radial nach außen erstrecken können, um die Flüssigkeit durch die Pumpe 200 zu fördern. Das Ventil 57 wird dabei mittels eines Pumpenflügels 44 geöffnet, wenn dieser den Sperrkanal 71 passiert. Dabei wird der Schließzylinder 55 des Ventils 57 mittels der geneigten Vorderseite des Pumpenflügels 44 aus einer geschlossenen Stellung 58 in eine geöffnete Stellung 56 geschoben. Während das Ventil 57 geöffnet ist, wird der Sperrkanal von dem Pumpenflügel 44 verschlossen, da sich dieser über einen Durchmesser des Sperrkanals 71 erstreckt. Das Ventil kann eine Druckfeder umfassen (nicht dargestellt), gegen deren Federkraft der Pumpenflügel 44 das Ventil 57 öffnet und die das Ventil 57 wieder schließt, sobald der Pumpenflügel 44 das Ventil 57 überfahren hat. Anstelle einer Druckfeder kann das Ventil 57 einen Magneten zum Schließen des Ventils 57 enthalten. Insbesondere können die Druckfeder oder der Magnet auf den Schließzylinder 55 wirken, so dass dieser in eine Stellung geschoben wird, in der er den Sperrkanal 71 verschließt.

Der Pumpeneingang 60 ist über eine nicht im Detail dargestellte Leitung 59 (zweite hydraulische Verbindung) mit dem Turbinenausgang 5 verbunden, und der Pumpenausgang 52 ist über eine nicht im Detail dargestellte Leitung 53 (erste hydraulische Verbindung) mit dem Eingang 17 der Umschaltvorrichtung 150 verbunden. Dadurch kann die Flüssigkeit in einem Kreislauf zwischen Pumpe 200 und Turbine 100 zirkulieren. Die beiden Leitungen 59, 53 können insbesondere aus durchsichtigem Material gefertigt sein, so dass eine Strömung der Flüssigkeit in dem Kreislauf von außen sichtbar ist. Es ist ebenso möglich, dass das Turbinengehäuse 31 und das Pumpengehäuse 45 ebenfalls aus einem durchsichtigen Material gefertigt sind. Dadurch kann sowohl eine Funktion des hydraulischen Getriebes überwacht als auch ein optisch ansprechendes Design erzielt werden.

Der Pumpeneingang 60 ist dazu eingerichtet, Flüssigkeit die aus der Leitung 59 in das Pumpengehäuse 45 eintritt (angedeutet durch den Pfeil, der mit dem Bezugszeichen 59 bezeichnet ist) in tangentialer Richtung zu einem zu der Antriebswelle 51 konzentrischen Kreis in den Umlaufkanal 71 einzuleiten. Ebenso ist der Pumpenausgang 52 vorliegend dazu eingerichtet, die Flüssigkeit in tangentialer Richtung zu dem zu der Antriebswelle 51 konzentrischen Kreis aus dem Umlaufkanal 71 herauszuleiten. Dabei kann durch den Pumpeneingang 60 in den Umlaufkanal 70 tangential eintretende Flüssigkeit auf im Umlaufkanal 70 befindliche Rückseiten der Pumpenflügel 44 drücken und somit eine Rotation des Freilaufs 61, 46 bzw. der Antriebswelle 51 in Strömungsrichtung der Flüssigkeit bewirken. Die Flüssigkeit kann nach dem Umlauf im Umlaufkanal 70 durch den Pumpenausgang 52 tangential aus der Pumpe 200 austreten (angedeutet durch den Pfeil, der mit dem Bezugszeichen 53 bezeichnet ist). Dies kann insbesondere mit einem konstanten Moment und mit tangentialer Wirkung erfolgen, d.h. die Strömungsrichtung der Flüssigkeit kann an jedem Punkt im Umlaufkanal 70 tangential zu dessen Kreisbogenform sein. Mit anderen Worten kann die tangentiale Wirkung an jedem Punkt während des gesamten Umlaufs der Flüssigkeit im Umlaufkanal bestehen, wodurch ein hoher Wirkungsgrad der Pumpe 200 erreicht werden kann.

Das Ventil 57 in dem Sperrkanal 71 verhindert, dass Flüssigkeit, die sich im Bereich des Pumpenausgangs 52 befindet, zurück zum Pumpeneingang 60 gelangen kann. Somit kann verhindert werden, dass bezüglich der in der Pumpe 200 umlaufend strömenden Flüssigkeit ein "Kurzschluss" erfolgt. Ein Abschnitt 64 des Sperrkanals der sich zwischen dem Ventil 57 und dem Pumpenausgang 52 befindet, ist mittels eines Bypasskanals 54 mit dem Pumpenausgang 52 verbunden. Dadurch kann Flüssigkeit, die sich zwischen der Vorderseite eines in den Sperrkanal eintretenden Pumpenflügels 44 und dem Schließelement 55 des Ventils 57 befindet, zu dem Pumpenausgang 52 geleitet werden. Auf diese Weise kann verhindert werden, dass sich Flüssigkeit in dem Sperrkanal 71 vor dem Ventil 57 staut und dadurch eine Rotation des Freilaufs 61, 46 behindert oder sogar ganz verhindert wird.

### Bezugszeichenliste:

- 100: Turbine
- 150: Umschaltvorrichtung
- 200: Pumpe
- 2: Dichtung
- 4: Sammler
- 5: Ausgang Turbine
- 7, 21: Lager Turbinenwelle
- 8: Ritzel
- 9, 16: Lager Schaltzylinder
- 10: Schaltzylinder
- 11, 14: Dichtringe Schaltzylinder
- 12: Gehäuse Umschaltvorrichtung
- 13, 15, 62: Strömungskanäle Schaltzylinder
- 17: Eingang Umschaltvorrichtung
- 22: Rotorwelle
- 24: Rotor
- 26: Ausgänge Kanäle
- 27: Ringe
- 28: Kanäle der Turbine
- 29: Eingänge Kanäle
- 30: Ausgangswelle
- 31: Turbinengehäuse
- 32: Verschraubung Turbinengehäuse
- 42: Rotorschaufeln
- 43, 50: Kurbel
- 44: Pumpenflügel
- 45: Pumpengehäuse
- 46: Freilauf Außenring
- 47: Dichtring
- 48: höchster Punkt Pumpenflügel
- 49: tiefster Punkt Pumpenflügel
- 51: Antriebswelle
- 52: Ausgang Pumpe
- 53: erste hydraulische Verbindung
- 54: Bypassleitung
- 55: Schließelement Ventil
- 56: offene Stellung Ventil
- 57: Ventil
- 58: geschlossene Stellung Ventil
- 59: zweite hydraulische Verbindung
- 60: Eingang Pumpe
- 61: Freilauf Innenring
- 63: Verschraubung Pumpengehäuse
- 64: Abschnitt Sperrkanal
- 70: Umlaufkanal
- 71: Sperrkanal

## Patentansprüche

1. Hydraulisches Getriebe für ein Zweirad, aufweisend
- mindestens eine Turbine (100) mit einer Turbinenwelle (22), die mit einer Nabe mindestens eines Rads des Zweirads verbindbar ist, einem Rotor (24), der mit der Turbinenwelle (22) verbunden ist, und einem Gehäuse (31), in dem der Rotor (24) angeordnet ist,
wobei der Rotor (24) in dem Gehäuse (31) mindestens zwei Kanäle (28) ausbildet, die in unterschiedlichen Abständen konzentrisch zu der Turbinenwelle (22) angeordnet sind, und in denen jeweils eine oder mehrere Rotorschaufeln (42) angeordnet sind; und
- eine Pumpe (200), die mit einer Antriebswelle (51) des Zweirads verbindbar ist, an der mindestens eine Kurbel (43, 50) angebracht ist,
wobei die Pumpe (200) dazu eingerichtet ist, Flüssigkeit in einem Kreislauf von einem Ausgang (60) der Pumpe durch einen der mindestens zwei Kanäle (28) der Turbine (100) zurück zu einem Eingang (52) der Pumpe (200) zu fördern.

2. Hydraulisches Getriebe nach Anspruch 1, wobei jeder der mindestens zwei Kanäle (28) der Turbine (100) jeweils einen Eingang (29) und einen Ausgang (26) aufweist.

3. Hydraulisches Getriebe nach Anspruch 2, wobei vor den Eingängen (29) der mindestens zwei Kanäle (28) der Turbine (100) eine Umschaltvorrichtung (150) angeordnet ist, die dazu eingerichtet ist, die Flüssigkeit in einen der Kanäle (28) zu leiten.

4. Hydraulisches Getriebe nach Anspruch 3, wobei die Umschaltvorrichtung (150) mit einem Schalthebel des Zweirads verbunden ist.

5. Hydraulisches Getriebe nach Anspruch 3 oder 4, wobei die Umschaltvorrichtung (150) in das Gehäuse (31) der Turbine (100) integriert ist.

6. Hydraulisches Getriebe nach einem der vorstehenden Ansprüche, wobei der Ausgang (52) der Pumpe (200) mittels einer ersten hydraulischen Verbindung (53) mit einem Eingang (17) der Umschaltvorrichtung (150) verbunden ist, und die Ausgänge (26) der Kanäle (28) der Turbine (100) mittels einer zweiten hydraulischen Verbindung (59) mit dem Eingang (52) der Pumpe (200) verbunden sind.

7. Hydraulisches Getriebe nach Anspruch 6, wobei die erste und/oder die zweite hydraulische Verbindung (53, 59) aus einem durchsichtigen Material gefertigt sind.

8. Hydraulisches Getriebe nach einem der vorstehenden Ansprüche, wobei die Pumpe (200) über einen Freilauf (61, 46) mit der Antriebswelle (51) verbunden ist, auf dessen Außenseite (46) ein oder mehrere Pumpenflügel (44) angeordnet sind.

9. Hydraulisches Getriebe nach einem der vorstehenden Ansprüche, wobei die Pumpe (200) einen zu der Antriebswelle (51) konzentrischen Umlaufkanal (70) aufweist, der den Eingang (60) und den Ausgang (52) der Pumpe (200) verbindet, und einen Sperrkanal (71) aufweist, der zwischen dem Eingang (60) und dem Ausgang (52) der Pumpe (200) angeordnet und mittels eines Ventils (57) verschlossen ist.

10. Hydraulisches Getriebe nach Anspruch 9, wobei der Eingang (60) der Pumpe (200) dazu eingerichtet ist, die Flüssigkeit in tangentialer Richtung zu einem zu der Antriebswelle (51) konzentrischen Kreis in den Umlaufkanal (70) einzuleiten, und der Ausgang (52) der Pumpe (200) dazu eingerichtet ist, die Flüssigkeit in tangentialer Richtung zu dem zu der Antriebswelle (51) konzentrischen Kreis aus dem Umlaufkanal (70) herauszuleiten.

11. Hydraulisches Getriebe nach einem der Ansprüche 8 bis 10, wobei sich eine Rückseite jedes Pumpenflügels (44) senkrecht zu der Außenseite (46) des Freilaufs (61, 46) radial nach außen erstreckt und sich eine Vorderseite jedes Pumpenflügels (44) unter einem Neigungswinkel von der Außenseite (46) des Freilaufs (61, 46) zu einer äußeren Kante der Rückseite erstreckt.

12. Hydraulisches Getriebe nach einem der Ansprüche 9 bis 11, wobei jeder Pumpenflügel (44) dazu eingerichtet ist, das Ventil (57) zu öffnen, wenn ein Pumpenflügel (44) den Sperrkanal (71) passiert.

13. Hydraulisches Getriebe nach einem der Ansprüche 9 bis 12, wobei ein Abschnitt (64) des Sperrkanals (71) der zwischen dem Ventil (57) und dem Ausgang (52) der Pumpe (200) angeordnet ist, mittels eines Bypasskanals (54) mit dem Ausgang (51) der Pumpe (200) verbunden ist.

14. Verwendung eines hydraulischen Getriebes nach einem der Ansprüche 1 bis 13 zum Antrieb eines Zweirads, insbesondere eines Fahrrads oder eines Motorrads.

15. Zweirad, insbesondere ein Fahrrad oder ein Motorrad, umfassend zumindest ein hydraulisches Getriebe nach einem oder mehreren der Ansprüche 1 bis 13.
